# EUROPEAN PATENT SPECIFICATION

(11) **EP 2 768 372 B1**
(45) Date of publication and mention of the grant of the patent: **13.01.2016**
(21) Application number: 12794498.1
(22) Date of filing: 19.10.2012
(51) Int. Cl.: A47L 15/42

(54) **Method for controlling operation of a dish-washing machine**
VERFAHREN ZUR STEUERUNG DES BETRIEBS EINER GESCHIRRSPÜLMASCHINE
PROCÉDÉ DE COMMANDE DE FONCTIONNEMENT DE MACHINE À LAVER LA VAISSELLE

(30) Priority: 19.10.2011 IT TO20110944
(43) Date of publication of application: 27.08.2014
(73) Proprietor: Indesit Company, S.p.A., 60044 Fabriano (AN) (IT)
(72) Inventor: Barus, Silvia, I-10122 Torino (IT); Ten Bok, Marco Whilhelmus Gerhardus, I-10064 Pinerolo (TO) (IT); Benedetto, Gianluca, I-07024 La Maddalena (OT) (IT); Lippera, Mario, I-60043 Cerreto d'Esi (AN) (IT)
(74) Representative: Santonicola, Paolo
(86) International application number: PCT/IB2012/055732
(87) International publication number: WO 2013/057704

(56) References cited:
- EP-A1- 2 327 349
- DE-A1- 3 913 355
- DE-A1-102008 029 908

## Description

### Field of the invention

The present invention relates to a method for controlling a dish-washing machine and to a dish-washing machine that implements said method.

### Prior art

Some dish-washing machines are provided with a system for storing liquid, based upon the use of a tank external to the tub, generally set up against a stationary wall thereof. In said machines, the storage tank is provided in order to be able to re-use, during execution of a program for treatment of the dishes, part of the liquid used in the course of execution of a program carried out previously (typically, the liquid used in the last rinse of the dishes).

In the daily use of a machine of this sort, it may happen that, after carrying out a treatment program in the course of which the aforesaid tank is filled, the liquid remains within the tank itself for a relatively prolonged period of time, for example, a week or more. This may be due to the fact that, for example, in the aforesaid period the machine remains unused or else, although used, a treatment program is not executed that implies emptying of the tank. In said circumstances, the permanence of the liquid within the tank can give rise to undesirable effects, such as the development of bacteria, fungi, algae, and the like, or of bad smells.

From DE 39 13 355 A1 a method is known for controlling a dish-washing machine having a control system that includes means for selecting, starting and controlling a plurality of treatment programs, the machine having a tank for storage of water, wherein the programs of said plurality comprise:
- at least one program, which includes a step of filling of the tank with water,
- at least one program, which includes a step of emptying of the tank into a wash tub and a subsequent step of treatment of dishes that is carried out using the water emptied from the tank into the wash tub,
wherein, when the time of permanence of the water within the tank is equal to or greater than a prefixed value, are provided the operation of:
- carrying out a forced emptying of the tank, and
- draining from the wash tub the water discharged from the tank following said forced emptying, without using such water for the execution of a step of treatment of dishes.

### Aim and summary of the invention

In its general terms, the aim of the present invention is to indicate a methodology that enables solution of the aforesaid problems in an extremely simple, inexpensive, and reliable way.

The above object is achieved, according to the present invention, by a method for controlling operation of a dish-washing machine having the characteristics referred to in Claim 1, as well as by a dish-washing machine designed to implement said method. Preferred characteristics of the invention are specified in the dependent claims. The claims form an integral part of the technical teaching provided herein in relation to the invention.

### Brief description of the drawings

Further purposes, characteristics and advantages of the invention will emerge clearly from the ensuing detailed description of embodiments provided purely by way of explanatory and non-limiting example, with reference to the annexed drawings, wherein:
- Figure 1 is a partial and schematic perspective view of a dish-washing machine according to a possible embodiment of the invention;
- Figure 2 is a partial and schematic perspective view of a lower portion of the machine of Figure 1;
- Figure 3 is a schematic perspective view of a device for storing water used in the machine of Figures 1 and 2;
- Figure 4 is a schematic perspective view of a first valve device used in a machine according to the invention;
- Figure 5 is a schematic perspective view of a second valve device used in a machine according to the invention;
- Figure 6 is a schematic representation of a dish-washing machine according to an advantageous embodiment of the invention; and
- Figure 7 is a simplified diagram of a part of the electronic control system of a dish-washing machine according to one embodiment of the invention.

### Description of preferred embodiments of the invention

Reference to "*an embodiment*" or *"one embodiment"* in the framework of the present description is intended to indicate that a particular configuration, structure, or characteristic described in relation to the embodiment is comprised in at least one embodiment. Hence, phrases such as "*in one embodiment*" or "*in one embodiment,*" and the like that may be present in various points within the framework of the present description do not necessarily refer to one and the same embodiment. Moreover, the particular configurations, structures, or characteristics may be combined in any adequate way in one or more embodiments. The references used in what follows are merely provided for convenience and do not define the sphere of protection or the scope of the embodiments.

The use of the term "*fill*" and its derivatives, in the context of the present description and the attached claims, does not imply that the entire volume of the storage tank described hereinafter must necessarily be completely filled with water, given that - in the practical implementation of the invention - said tank may, and preferably will, be filled only partially with water. The generic term "*water*" is to be understood, according to the cases described and claimed, as water already used for executing a step of treatment of the dishes, such as, for example, a rinsing step, or else as water charged into the tub of the machine from an external water mains supply, but not yet used for the purposes of treatment of the dishes (and hence water that is still substantially clean, i.e., substantially without residue of dirt removed from the dishes and/or of washing agents, such as a detergent or a rinse aid). Where not otherwise specified, moreover, within the framework of the present description and the attached claims, the term "*effective*"*,* when used with reference to operation of a sprinkler system or of a sprinkler member of the machine, is intended to indicate that said system or member operates fully for the purposes of treatment of dishes, for example, washing or rinsing. In this perspective, effective operation of a sprinkler member implies that the water comes out of the holes or nozzles of said member with jets that impinge upon the dishes contained in the tub so as to be able to carry out the treatment function.

It should moreover be pointed out that in the sequel of the present description only the elements useful for an understanding of the invention will be described, taking for granted, for example, that the machine described comprises all the elements in themselves known for operation of a dish-washing machine, including a possible external cabinet thereof, a user interface, a control system, pumps, level sensors, heating elements, means for charging water from a domestic water mains supply, a dispenser of washing agents, a system for sprinkling the dishes, etc.

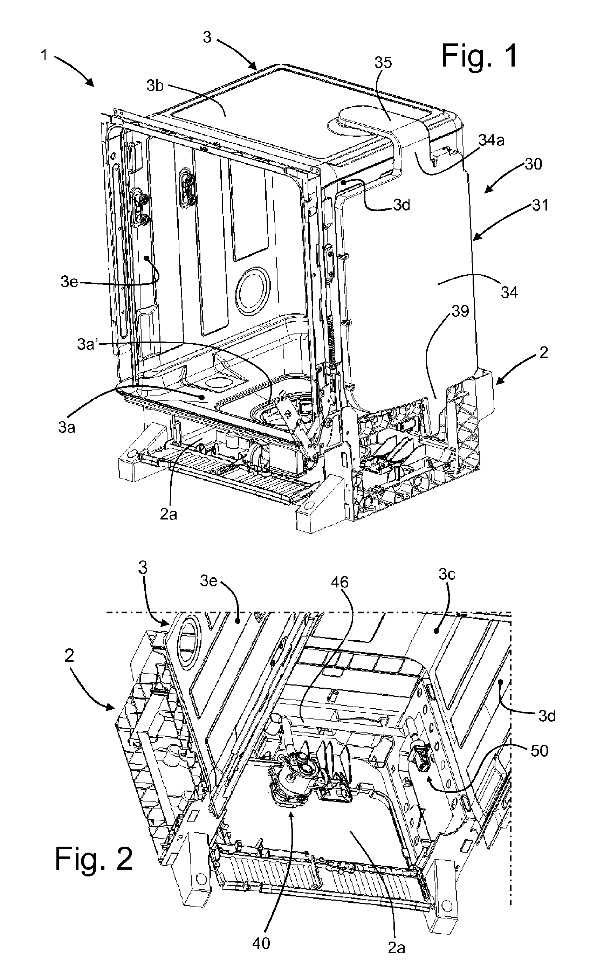

Represented schematically in Figure 1 is a dish-washing machine 1 according to a possible embodiment of the present invention, provided with a system for storing liquid. As has been said, the machine 1 is illustrated limitedly to the parts of immediate interest for an understanding of the present invention.

The machine 1 has a structure that comprises a base 2 and a wash tub 3, supported by the base 2. The base 2, made, for example, of injection-moulded thermoplastic material, preferably has open side walls and defines a housing space 2a, positioned within which are various functional components of the machine 1, amongst which, for example, a washing pump, a discharge pump, a pressure switch, a sump for collecting the water, etc., here not represented for needs of greater clarity of the drawings.

The wash tub 3 is of a conception as a whole known, apart from the specific characteristics envisaged according to preferential embodiments of the invention, regarding the positioning of a device for storing liquid external to the tub.

The tub 3 has a lower wall 3a, an upper wall 3b, and four side walls. Visible in the figures are only the stationary side walls of the tub 3, i.e., the rear wall 3c, and the right-hand and left-hand walls, designated by 3d and 3e; the fourth side wall of the tub 3, i.e., its front wall, is constituted by an internal shell of the door of the machine, here not represented (the so-called "counter-door"). In Figure 1, it may be seen how the lower wall 3a of the tub defines a central opening 3a', mounted at which is the already mentioned collection sump integrating the filtering system of the machine. It is to be noted that also in Figure 2, for needs of greater clarity, the lower wall of the tub and other components normally present in the housing space 2a, such as the aforementioned sump, a washing pump, a discharge pump, etc., are not represented.

The system for storing liquid that equips the machine 1 basically includes an storage device or tank, designated by 30 in Figure 1, and a corresponding filling/emptying arrangement that includes valve means, designated by 40 and 50 in Figure 2. As may be clearly seen, the tank 30 extends substantially on the outside of the tub 3, whereas the valve means 40 and 50 are substantially installed within the space 2a for housing the base 2.

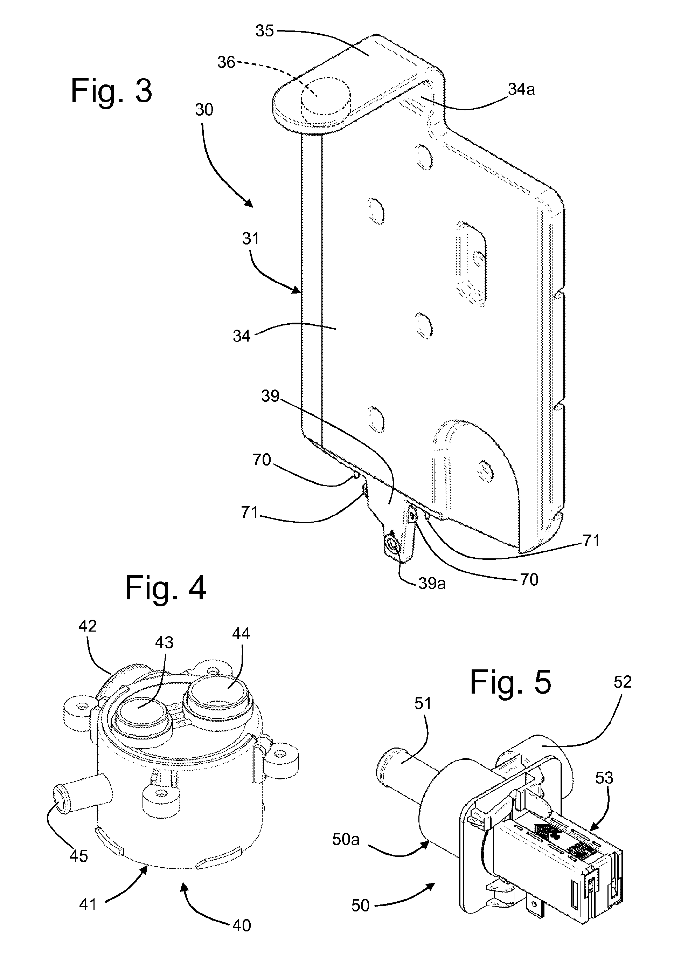

Illustrated in Figure 3 is a preferential embodiment of the tank 30, which basically consists of a hollow body 31 made of plastic material, having a generally flattened configuration and preferably made of a single piece. A hollow body of this sort can, for example, be advantageously obtained by blow-moulding of thermoplastic material.

As may be appreciated also from Figure 1, the body 31 of the tank 30 has a first vertical portion 34 that - in the installed condition - extends axially in the direction of the height of the tub 3, generally set facing and parallel to a side wall of the latter, in particular the right-hand stationary wall 3d. The body 31 of the tank 30 then includes a second generally horizontal portion, designated by 35, which has dimensions and section of passage decidedly smaller than the portion 34 and extends substantially perpendicular to the latter, the portions 34 and 35 being connected to one another by means of a radiusing stretch 34a. As may be clearly seen also in Figure 1, the horizontal portion 35 of the body 31 of the tank is generally set facing and parallel to the upper wall 3b of the tub 3: said horizontal portion 35 has, in its face facing the upper wall 3b of the tub 3, an opening 36 that is to be set in a position corresponding to a corresponding opening of the tub 3. As will be seen, the portion 35 of the hollow body 31 is intended for connecting the upper region of the portion 34 to the tub 3.

The tank 30 also has a lower opening. In one embodiment, at the lower end of the vertical portion 34 of the body 31, defined in a substantially central position is a restricted terminal portion, designated by 39. Preferably, the aforesaid lower opening - designated by 39a in Figure 3 - is provided at the restricted terminal portion 39, in the part thereof facing the tub 3 or the base 2.

The arrangement for filling and emptying the tank 30 used in the machine of Figures 1 and 2 in part exploits the valve means used for supplying selectively the sprinkler members - not represented in Figures 1 and 2 - in order to carry out treatment programs on a small load or to carry out alternating steps of washing or rinsing (i.e., performed by supplying just one of the sprinklers or by supplying alternately one or other of the sprinklers).

These first valve means hence comprise a device for alternating supply of the sprinklers, designated by 40 in Figures 2 and 4. The device 40, like the similar devices according to the known art, has a casing 41 provided with an inlet 42, for connection to the delivery of a known washing pump, and two main outlets 43 and 44, connected respectively to the supply of the upper sprinkler and to the supply of the lower sprinkler of the machine, the outlet 44 preferably having a section of passage smaller than the outlet 43. Mounted displaceable within the casing 41 is an open/close member or distributor, which can be actuated by a corresponding actuator isolated from the fluid, for assuming at least one first position, of opening of both of the outlets 43 and 44, and a second position, of opening of the outlet 43 and of closing of the outlet 44 (and/or vice versa), according to the known art. For example, the aforesaid distributor member can have the shape of a disk or of a circular sector, with one or more through holes, and be mounted displaceable in front of the aforesaid outlets 43 and 44.

In a preferred embodiment of the invention, the device 40 is configured in such a way that the casing 41 additionally defines a further outlet, designated by 45, which is always in fluid communication with the inlet 42, irrespective of the operating position of the aforesaid distributor member. Connected to said outlet 45, which preferably has a section of passage smaller than the outlets 43 and 44, is the first end of a duct or pipe, designated by 46 in Figure 2, the second end of which is connected to the lower opening 39a of the tank 30, with interposition of second valve means of the filling arrangement, represented by a valve, designated by 50 in Figure 2, of any known conception.

In the embodiment exemplified, the valve 50 (represented in Figure 5) is a valve of an open/closed type, which includes a radiusing body 50a having an inlet 51, connected to which is the pipe 46, and an outlet 52, connected with interposition of suitable sealing means to the opening 39a of the tank 30. Operating between the inlet 51 and the outlet 52, within the body 50a, is an open/close element, displaceable by means of an actuator, which, in the embodiment exemplified, is an electrothermic actuator 53, of a type in itself known. The valve 50 may be controlled by the control system of the machine independently of the device 40 and is of a normally closed type: consequently, in the absence of supply to the actuator 53, the pipe 46 is not in fluid communication with the inside of the tank 30.

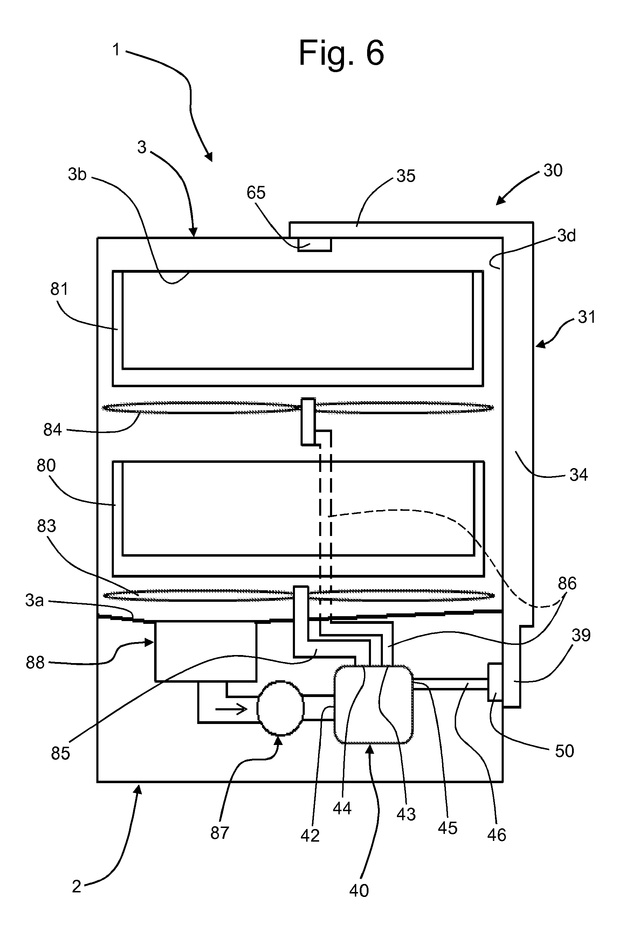

In one embodiment, defined in the upper wall 3b of the tub 3 is a through hole (not shown), which is preferably circular and formed in an area of said wall 3b that is slightly drawn outwards. On the other side, the upper opening 36 of the tank 30 comprises a projecting attachment, defined in the face of the body portion 35 that is to face the upper wall 3b of the tub 3. In the example (see the dashed part of Figure 3), said attachment basically consists of a cylindrical stretch, which is to be fitted in the aforesaid hole of the upper wall of the tub, with possible interposition of sealing means. Coupled to the part of the cylindrical stretch that projects within the tub 3 is a fixing member, designated by 65 in Figure 6, which advantageously functions also as shielding for the opening 36: for this purpose, in a possible embodiment, the aforesaid cylindrical stretch of the opening 36 and the member 65 are fitted together with threaded coupling or else bayonet coupling. As may be appreciated also from Figure 6, then, for the purposes of top fixing of the hollow body 31 of the tank 30, the cylindrical stretch of the opening 36 is fitted in the through hole of the upper wall 3b, and coupled on the part thereof projecting into the tub is the member 65. In a preferred embodiment, the body 31 of the tank 30 is then fixed, in its lower part, to the base 2, for example, at the sides of the restricted terminal portion 39, with any known modality.

In general terms, the machine 1 according to the invention is equipped with an electronic microcontroller control system of its own, with corresponding user interface, of a substantially known conception, which enables selection, start-up, and control of a plurality of treatment programs, where at least one of said programs is configured for managing operation of the liquid-storage system.

In the schematic representation illustrated in Figure 6, provided inside the tub 3 of the machine 1 are a lower basket 80 and an upper basket 81, designed to contain respective loads of dishes and mounted - in a way in itself known - so that they can be pulled out and/or removed through the front opening of the tub. The machine 1 has, as has been said, charging means, for filling the tub with water coming from a domestic water mains supply. Said charging means, which may be of any known type, are configured for charging the tub 3 with a substantially predetermined amount of water, said amount being variable according to the type of treatment cycle and/or as a function of the operating step of a treatment cycle. In this connection, the charging means preferably include dosing means, such as a level sensor, for example, a pressure switch. Charging of the water may be of a dynamic type, as known in the sector, i.e., with the washing pump that is started whilst water is still being taken in from the external water mains supply.

Once again according to known art, the machine 1 has a sprinkler system, which includes at least one first sprinkler member, designated by 83, and one second sprinkler member, designated by 84, for sprinkling water on the dishes contained in the baskets 80 and 81, respectively. The sprinklers 83 and 84 are preferably rotary sprinklers, set underneath the corresponding basket and at a distance therefrom, which have a respective hollow body that is rotatably mounted at the end of a corresponding supply pipe belonging to the main hydraulic system of the machine. The body of each sprinkler has - at least in the part thereof facing the respective dish basket - a series of holes or nozzles. In the example represented, the hydraulic circuit of the machine includes two supply ducts, designated by 85 and 86 for the sprinkler 83 and the sprinkler 84, respectively.

Designated by 87 is an electric washing pump, i.e., a pump driven by an electric motor, for example, a centrifugal pump, having an inlet section and an outlet section, which is in fluid communication with the inlets of the pipes 85 and 86, by way of the first valve means represented by the device 40. As already explained, the device 40 is commutable (switchable), upon command from the control system of the machine 1, at least between a first condition, where the delivery section of the pump 87 is in fluid communication with the sprinklers 83 and 84, via the corresponding outlets 44 and 43 and the pipes 85 and 86, and a second condition, where the delivery section of the pump 87 is in fluid communication with just one of the sprinklers 83 and 84, via the outlet 44 and the pipe 85 or via the outlet 43 and the pipe 86, respectively.

Mounted at the opening 3a' (see Figure 1) of the lower wall 3a of the tub is the corresponding collection sump, designated by 88, having an outlet in fluid communication with the inlet section of the pump 87. As already mentioned, such a sump includes the filtering system of the water (understood as clean water, or else already added with washing agents or rinsing additives, or else already containing residue of dirt removed from the dishes). The level sensor previously referred to can be operatively associated to the sump 88.

As per the known art, for the purposes of execution of a step of treatment of the dishes, such as a washing step or a rinsing step of a program of treatment performed by the machine 1, the water charged into the tub 3 from the external water mains supply reaches the lower wall 3a and converges towards the sump 88. The water is sucked in by the sump 88 via the pump 87, which forces the water into the pipe 85 and/or the pipe 86, for supplying the sprinkler 83 and/or the sprinkler 84. The water at outlet from the sprinkler or sprinklers impinges upon the dishes contained in the basket 80 and/or in the basket 81, and drops onto the lower wall 3a, to return to the sump 88 and then - after prior filtering - be recirculated by the pump 87. At the end of the treatment step, the water present in the bottom of the tub (the sump 88 and the wall 3a) is evacuated from the machine 1, via a known discharge pump (not represented).

In the course of the steps of treatment executed with water (washing and rinsing), the control system of the machine 1 governs the pump 87 at a given treatment speed, necessary for supplying the water - possibly previously heated - from the bottom of the tub 3 to the sprinkler system 83-85 and 84-86, so as to render effective operation of said system for the purposes of treatment of the dishes. In other words, the motor of the pump 87 is driven at a speed designed to bestow a pressure upon the water in the pipe 85 and/or in the pipe 86 such that the water comes out of the holes of the sprinkler 83 and/or the sprinkler 84 with a height of the jets sufficient for striking the dishes contained in the respective baskets 80 and/or 81 and thus carry out the function of washing or rinsing; at the same time the water passes through each sprinkler with sufficient pressure to cause rotation thereof so that said dishes are cyclically impinged upon by the jets of water. As has been said, at the end of the treatment step, the discharge step is carried out, whereby the water previously used for treatment of the dishes is evacuated from the tub 3, via the discharge pump governed by the control system.

In one embodiment of the invention, at least one of the programs that can be run on the machine 1 envisages that, prior to the step of discharge of the water used for a rinsing operation, in particular the last rinse, the control system will issue a command for opening of the valve 50 and start-up of the washing pump 87. The pump 87 forces the rinsing water into the inlet 42 of the device 40 (Figures 2 and 4), and part of said water, in addition to being fed to one or both of the sprinklers 83, 84, via the outlet 43 and/or the outlet 44, is free to flow into the outlet 45, and then reach the tank 30, through the pipe 46. The tank 30 is in this way progressively filled from beneath, irrespective of the operating position of the device 40. The filling step can, for example, be timed. Since the capacity of the washing pump 87, the section of the various passages (the device 40, the pipe 46, and the valve 50), and the time of switching of the valve 50 are known, the step of filling the tank 30 can in fact last a prefixed time in order to obtain a certain level of filling of the tank 30, which is substantially predetermined. It is to be noted that, advantageously, the horizontal portion 35 of the tank, with the attachment 62, the corresponding opening 36, and the member 65 (Figures 3 and 6) can function as overflow system for the tank 30; for this purpose, the member 65 can present one or more outlet passages facing the inside of the tub, preferably radial passages.

After the programmed time, the control system interrupts supply of the actuator 53 of the valve 50, which thus recloses. After arrest of the washing pump, the discharge pump is started for evacuating from the machine the possible residue of rinsing water still present in the tub.

In the course of a subsequent washing program that envisages the use of the water stored in the tank 30, for example, at start-up thereof, the control system issues a command for a new opening of the valve 50, in the absence of supply of the pump 87, for example, in the absence of a concomitant charging of water from the external water mains supply (if the volume of water stored in the tank substantially corresponds to the amount necessary to carry out the treatment step). In this way, the water present in the tank 30 can flow off by gravity via the pipe 46, before reaching the device 40, then the pump 87, and finally the sump 88, connected to which is the intake branch of the pump 87. Basically, then, in the emptying step, the water flows away into the tub from the tank 30 with a path reverse with respect to the one followed in the filling step, irrespective of the operating position of the device 40. The water thus introduced into the tub can be used, in the example considered, after reclosing of the valve 50, for the purposes of execution of a first step of washing of the dishes. The water discharged from the tank will be substantially at room temperature, and this enables, in addition to recovery of liquid, also a certain energy saving for heating thereof (in particular, when the mains water has a temperature lower than room temperature). After carrying out the aforesaid first washing step, the water is then discharged from the tub via the discharge pump.

The volume of water charged into the tank 30 may be smaller than, greater than, or substantially equal to the volume necessary for carrying out a washing step. In the first case, then, after complete emptying of the tank 30, the control system will issue a command for an additional step of charging water from the mains supply up to the level necessary (which is, for example, detected with a suitable level sensor, such as a pressure switch). In the second case, the valve 50 will be opened for a time such as to ensure a partial discharge of the tank 30, i.e., off-flow of a volume of water substantially corresponding to the amount necessary to carry out the washing step. In the third case, as in the first case, the time of opening of the valve 50 will be such as to enable complete emptying of the tank 30. It may be taken for granted that, in the second case referred to, control of the valve 50, for the purposes of partial emptying of the tank 30, can also be performed by exploiting a known level sensor present in the tub, such as a pressure switch (basically, when said sensor detects reaching of the level of water necessary to carry out the washing step, the control system issues a command for closing of the valve 50, which may also be of a solenoid type). It is equally clear that - in more sophisticated embodiments - the process of filling/emptying the tank 30 can be controlled by providing a corresponding sensor (for example, a turbine flowmeter) between the device 40 and the valve 50, or else between the valve 50 and the lower opening 39a of the tank 30.

As previously explained, it may happen that, after carrying out a treatment program that envisages filling of the tank 30, the machine 1 is not used for a certain period of time, or else is used but without executing another treatment program that involves complete emptying of the tank 30.

In order to prevent prolonged permanence of the water inside the tank from possibly giving rise to undesirable effects, such as development of bacteria, fungi, algae and the like, the invention envisages carrying out forced emptying of the tank. In this perspective, according to the invention, a complete forced emptying of the tank 30 is governed by the control system of the machine 1 when the time for storing the water in the tank is equal to or exceeds a prefixed threshold value. It may be assumed, merely by way of example, that said threshold value represents a period of time equal to one week, and that stored in the control system is information representing said threshold value.

The control system of the machine 1 is moreover prearranged for starting a time count, on the occasion of the execution of a treatment program that envisages filling of the tank 30, for example, at the moment of reclosing the valve 30 that terminates charging of the tank 30. The electronic control system is conveniently able to count the time in so far as its microcontroller is provided with said function (as practically any current, even low-cost, microcontroller), and thus provide a time counter.

If, after start of the count and within the period represented by the aforesaid threshold value, the machine executes a treatment program that implies complete emptying of the tank 30, the control system stops and/or zeroes the counter: said reset or zeroing may be made, for example, at start of the program in question, or when the control system - within said program - actually issues a command for opening of the valve 50 aimed at emptying the tank 30. Possibly, stopping and/or zeroing of the counter may be made on the occasion of a subsequent filling of the tank. Instead, if the aforesaid period is reached or exceeded without the machine in the meantime having executed a program that envisages complete emptying of the tank, the control system will issue a command for complete forced emptying of the tank 30, on the occasion of the execution of any program that is started by a user after the aforesaid period has elapsed. Upon forced emptying, the control system will likewise stop and/or reset the time counter.

In practice, the control logic - at least upon start of any program by a user - compares the value of the time counter with the threshold value. If the desired value has not been reached or exceeded, the machine 1 executes the program selected and started by the user normally. Instead, if the threshold value has been reached or exceeded, the control system of the machine 1, in an initial period of the program selected by the user, for example, the first step of the program, issues a command for complete forced discharge of the tank and zeroing or arrest of the time counter. Of course, counting of the time may be carried out even in reverse, i.e., like a countdown. In other words, upon filling of the tank, the control system will set the value of the counter to one week and, with passage of the time, said value will decrease progressively: in this case, reaching of the time "zero", or overstepping thereof, will cause subsequent emptying of the tank 30, as described previously.

The water introduced into the tub from the tank 30 may, for example, be immediately discharged, and for this purpose, the control system will issue a command for activation of the discharge pump. This can be followed by a charging of water into the tub from the water mains supply. It is also possible for the treatment program started by the user after expiry of the predetermined period of time to be a program that envisages the use of the contents of the tank: for such a case, the control system will be prearranged to make up for any lack of liquid in the tank 30 by carrying out complete recharging with water from the mains supply (the fact that the time count has been stopped or zeroed indicates, for example, to the control system that the tank 30 is empty).

The mode of operation described presupposes that the microcontroller of the control system counts the time and, hence, is supplied continuously. Said condition is met in the machine 1, as in the majority of modern dish-washing machines, which, even when it is not being used, remains in a state of stand-by, in which the electronic control card is in any case supplied.

In one embodiment in order to face possible interruptions of the voltage supply to the machine, for example, due to a black-out, the microcontroller of the control system can be equipped with an auxiliary supply source, such as an emergency power-supply unit.

In another embodiment, in the case where the control system is not equipped with such an emergency power-supply unit, a different methodology for managing the complete forced discharge of the tank 30 is implemented.

In this case, the control system detects - with modalities in themselves known - the interruption of the electric power supply to the machine and stores corresponding information (as well as possibly the value reached by the time counter); moreover, in the case where a treatment program was in progress at the time of interruption of supply, the control system likewise stores information regarding the state of advance of the program: in this way, if the interruption of supply has occurred in the course of execution of a program, upon reinstatement of the electric power supply the machine can resume execution of the program from the point that it had reached, according to modalities widely known in the sector.

The absence of electric power supply, however, brings about in this case arrest of the count or of the time counter. At a theoretical level, the absence of electric power supply could continue for a period exceeds the threshold value previously referred to (one week, in the example). On this basis, if the program that was in progress did not envisage discharge into the tub of the contents of the tank 30, then at start of the treatment program following upon resumption of the electric power supply, the control system of the machine will in any case issue a command for complete forced emptying of the tank 30, irrespective of the value assumed by the time counter and irrespective of the type of program started subsequently by the user (in other words, the previous program will pick up from the point reached at the moment of interruption of power supply and, at the start of the subsequent program, complete forced discharge will be performed, as has been described previously).

If, instead, the program in progress at the time of interruption of supply was a program that envisaged the use of the contents of the tank 30, the control system will resume the program from the point reached at the moment of interruption. The program may be devised for facing various possible cases. For example, if the contents of the tank had already been completely emptied into the tub and the step of use of the corresponding water had already been carried out prior to interruption, the program may proceed as usual. If, instead, the tank had not yet been emptied, then there may be envisaged a complete forced discharge and a subsequent filling of the tub with water from the mains supply. Another possible option is that of using in any case the contents of the tank within the corresponding step of the program.

In general terms, then, at the start of each treatment program the control system of the machine checks not only the value assumed by the time counter, but also whether information has been stored representing an interruption of the electric power supply.

Even in the case where interruption of electric power supply occurs when no program is in progress, a command for complete forced emptying of the tank may be issued by the control system at the start of a subsequent treatment program, irrespective of the whether the program selected and started by the user involves or not complete emptying of the tank 30, as has been described previously.

In one embodiment, the control system of the machine 1 is provided with means for estimating the duration of a lack of voltage supply, without the need to have available auxiliary energy sources, such as batteries or capacitors with high capacitance.

In this embodiment, the control logic:
- measures and stores, upon an interruption of the voltage supply to the machine, the value of a characteristic quantity of the state of operation of the machine itself;
- measures, upon resumption of the voltage supply, the current value of the aforesaid characteristic quantity;
- compares the value stored and the current value of the characteristic quantity;
- estimates the duration of the interruption of the voltage supply by the grid, on the basis of the comparison; and
- updates the time count accordingly.

Such an operation can be based upon the observation of the variation of a temperature value on board the machine, between the instant in which an interruption of the voltage supply occurs and the instant in which this is restored, the law with which the temperature evolves in time in the absence of electric power being known beforehand, in so far as it has been deduced experimentally.

In this perspective, estimation of the duration of the lack of grid supply can for example be performed on the basis of the thermal evolution, in the absence of electric power, of one or more components of the machine - for example, of its control system - that are subject to heating in the presence of the corresponding supply, i.e., of components that present a thermal capacity such as to guarantee a sufficiently slow dynamics of the temperature in the absence of the grid voltage.

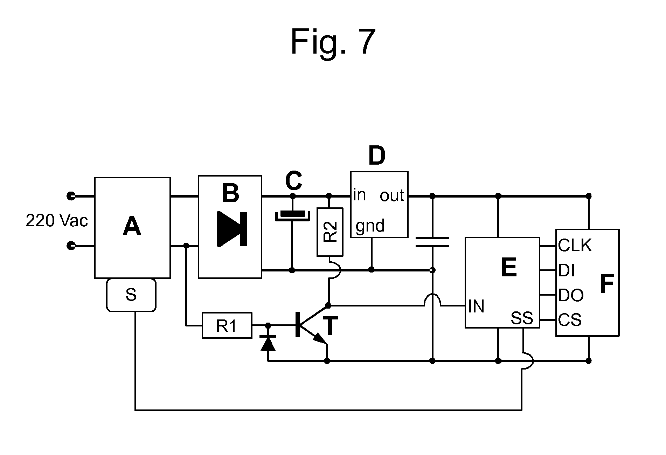

Given that the dish-washing machine 1 is equipped with an electronic control system, in one embodiment the quantity to be used as indicator of the state of operation of the electrical household appliance for the purposes of estimation of the duration of an interruption of the grid supply is hence the temperature of one or more electrical and/or electronic components of the control system itself or, more in general, of the dish-washing machine itself. Consider in fact that, when the dish-washing machine is in stand-by, some electrical/electronic components of the corresponding control system are subject to heating (this occurs, for example, for the transformer A of Figure 7, described hereinafter).

The law with which the temperature of such a component evolves in conditions of absence of supply of the electric-power grid can be easily deduced through simple tests and can be just as easily implemented in the program of a microcontroller using appropriate techniques of a tabular type or else techniques based upon the use of the by now well-known fuzzy logic.

In this way, according to the variant proposed, the microcontroller can be put in a condition to compare the value of the temperature of the component upon return of the electric power supply with the temperature value assumed at the time of interruption and, knowing the law with which the temperature of the component evolves in the absence of electric power, estimate with sufficient approximation the effective duration of the interruption itself, and then proceed to updating the counter. Said updating is performed by the microcontroller by simply adding the estimated duration of the interruption of supply to the value of the counter assumed at the time of interruption itself, said value being appropriately stored in a purposely provided non-volatile memory (for example, of an EEPROM or FLASH type).

In order to execute said function, the control system must:
i) be managed by a microcontroller or by some other electronic device dedicated to specific applications (ASIC);
ii) have available a non-volatile memory, preferably of an EEPROM type or else of a FLASH type, which is able to communicate with the microcontroller, or with the dedicated electronic device that performs the functions thereof, and in which the data of interest at the time of interruption of supply can be stored;
iii) have available means that enable timely detection by the microcontroller of the interruption of electric power supply so as to be able to proceed rapidly (within a few tens of milliseconds and, in any case, before the microcontroller and the non-volatile memory cease to function correctly) to storage of the possible state of the program (point reached), of the parameter monitored (temperature), and of the variables of interest, such as the information representing interruption of supply (useful, for example, for the previous implementation) and the value of the time counter;
iv) finally possess, within the program memory of the microcontroller, the information regarding the law of variation in time of the temperature of the component monitored so as to be able to estimate, on the basis of the variation of said state, the duration of interruption of supply and update the time counter accordingly.

Conditions i) and ii) are typically verified in the majority of current electronic control systems for dish-washing machines, which usually comprise a microcontroller equipped with appropriate electrically writable and erasable memory means.

As regards the condition iii), timely detection of an interruption of power supply and rapid storage of the value of the time counter and of the further information of state of the system can be enabled in a simple way exploiting the energy accumulated in the filter capacitor of a typical power supply unit for microcontroller, as described, for example, hereinafter.

Also the condition iv), as has been said, can be easily obtained via software, after prior execution of the experimental activities necessary for defining the law of evolution of the temperature of the electrical or electronic component monitored in conditions of interruption of electric power supply.

Figure 7 is a schematic illustration of a part of the control system, and in particular the electrical diagram of a power supply unit for a microcontroller E, forming part of the electronic control system of a dish-washing machine according to one embodiment of the invention. The power supply unit consists of a transformer A, a rectifier B constituted by a diode bridge, a filter capacitor C, and a voltage regulator D. Designated by S is a sensor means, designed to detect the value of a quantity that is considered characteristic of the state of operation of the dish-washing machine, and to communicate it to an appropriate input SS of the microcontroller E.

Hence, in a preferred embodiment, the sensor S is constituted by a temperature sensor, such as a simple negative-temperature-coefficient (NTC) resistor, appropriately connected to the input SS, set in the proximity of the electrical or electronic component or components subject to heating, for example, the transformer A.

Designated by F is by an electrically writable and erasable memory, for example, an EEPROM, associated to the microcontroller E, in such a way that the latter, appropriately programmed for the purpose, is able to:
- store in the memory F the value of the time counter, instant by instant;
- store in the memory F information regarding the state of the dish-washing machine, such as the step of the program, the temperature value detected by the sensor S, occurrence of an interruption of the grid supply; and
- retrieve from the memory F the information regarding the state of the electrical household appliance, previously stored therein.

Designated by T is a transistor, applied to the base of which is the a.c. voltage at output from the secondary of the transformer A, through an appropriate resistor R1.

In this way, at output from the collector of the transistor T a square wave is produced, which, with the aid of a pull-up resistor R2, is sent to an appropriate input IN of the microcontroller E. The period of the aforesaid square wave is equal to 20 ms, considering a grid frequency of 50 Hz.

According to the arrangement illustrated in Figure 7, and with a simple programming of the microcontroller E, the latter is able to detect an incipient interruption of the supply when the grid pulse is absent on the input IN for a time longer than 20 ms. In said eventuality, exploiting the energy accumulated in the filter capacitor C, the microcontroller E can continue to work correctly for a few instants, and hence carry out storage in the memory F of the information of the value of the counter, of the temperature value detected by the sensor S, and of the other information of interest (such as the step of the program reached and the occurrence of interruption of grid supply).

Next, upon return of the electric power, the microcontroller E will retrieve from the memory F the information regarding the time counter and the aforesaid temperature value prior to interruption of supply, will estimate the duration of the latter and will update the counter by adding the estimated duration of the interruption to the value stored of the time counter in F at the time of interruption, before this produced complete arrest of the system. Obviously, also the other information of interest will be retrieved from the memory F, such as the information referred to previously (step of the program and occurrence of interruption).

It is clear that the solution proposed according to the present variant is not aimed at obtaining an exact calculation of the duration of an interruption of the voltage supply, and in this sense allows for margins of imprecision: what counts, however, is that the control system is able to understand with sufficient approximation whether the duration of the interruption has been significantly long.

Estimation of the duration of the interruption of supply occurs by comparing the values of the current state and those of the previous state of the parameter monitored, i.e., the temperature of the electrical or electronic component, on the basis of the law with which, in the absence of electric power, the aforesaid parameter evolves in time; said law, as has been said, is appropriately implemented in the program of the microcontroller E, for example, in a tabular form or according to fuzzy logic. It is in fact clear that, through tests, it is possible to determine the law with which the temperature of the electrical or electronic component in question evolves, in the absence of electric power supply and encode it in the program memory of the microcontroller E in order to estimate with sufficient approximation the duration of the interruption of supply, and hence proceed to possible updating of the time counter.

Of course, the logic described with reference to Figure 7, as regards the detection of an incipient interruption of the electric power supply and storage of the corresponding information and of the information regarding the step of the program reached, can be used also in the case of the embodiments that do not envisage updating of the time counter.

The embodiments that envisage updating of the value of the time counter are based on the realization of the fact that, currently, the duration of black-outs is on average contained. In practice, it is, however, possible that the interruption of supply is due to occasional causes different from a black-out, and has a decidedly longer duration: consider tripping of a safety switch of the domestic electrical wiring system, which is not re-activated if not after several hours, for example, owing to the fact that the user is out of the house. In said circumstances, the analysis of the variation of temperature of an electrical/electronic component of the system could not enable, beyond a certain duration of the interruption of supply, a significant estimate to be obtained (in other words, the interruption of supply is so long that the component in question "cools" completely, i.e., goes to room temperature, without further variations in temperature, it thus not being possible to obtain a significant time estimate). To deal with such cases, the control system can be prearranged for implementing the logic described previously (based upon storage alone of the information regarding the occurrence of an interruption of electric power supply) when the estimated duration of the interruption of supply exceeds a corresponding prefixed threshold.

In the embodiments described previously, the water drawn into the tank 30 is water that has already been used for the treatment of dishes in an operating cycle, and in particular rinsing water, said water being then made available in a subsequent operating cycle of the machine. In possible variant embodiments, however, the operating modalities of management of the liquid-storage system (filling and emptying of the tank 30, as well as use of the liquid) may differ from the ones exemplified previously. In this perspective, for example, in an advantageous embodiment, filling of the tank 30 can also be performed with substantially clean water, in the course of a treatment cycle: the water thus stored in the tank 30 can then be at least partially heated, in the course of one or more hot-treatment steps of the same cycle, thanks to the heat exchange between the tub 3 and the body 31 of the tank 30, in view of execution of a treatment step. In another embodiment, the substantially clean water can be charged into the tank 30 in the course of a treatment cycle so that it can then be used in a subsequent treatment cycle: in such a case, the water discharged from the tank will be substantially at room temperature, and this enables a certain energy saving for heating thereof to be obtained (as mentioned, the mains water generally has a temperature lower than room temperature).

A possible embodiment in this sense will be described with reference to Figure 6.

As explained previously, in the course of the treatment steps executed with water (washing and rinsing) the control system of the machine 1 operates the pump 87 at a given treatment speed, necessary for supplying the water - possibly previously heated - from the bottom of the tub 3 to the sprinkler system 83-85, 84-86, so as to render operation of said system effective for the purposes of treatment of the dishes.

According to an advantageous embodiment of the present invention, the motor of the electric pump 87 is a speed-controllable motor, of any known type designed for the purpose. In a preferred embodiment, the motor is a permanent-magnet brushless motor, and the control system of the machine 1 includes a driving circuit - of a type in itself known -, which enables variation and control with relative precision of the r.p.m. of the motor. The motor of the electric pump 87 may also be an asynchronous motor, with control of its speed that is performed via means - which are also in themselves known - designed to partialize the supply current.

In this embodiment of the invention, filling of the tank 30 is obtained by issuing a command for actuation of the motor of the pump 87 at a reduced speed, i.e., lower than the treatment speed that renders the sprinkler system effective.

More in particular, the control system is prearranged for driving the motor of the pump 87 in such a way that, in the step of filling the tank 30, the corresponding motor will turn at a reduced speed such that the sprinkler system does not prove effective: said reduced speed is hence lower both than the speed used in the course of the steps of washing and rinsing and than the minimum speed necessary for obtaining with the pump 87 a pressure of the water sufficient to cause wetting of the dishes contained in the lower basket 80 and/or upper basket 81. For example, in the case of supply of the lower sprinkler 83, the jets at outlet from said sprinkler in the steps of filling the tank 30 will have a height indicatively comprised between approximately 3 mm and approximately 30 mm, preferably between approximately 5 mm and approximately 20 mm, even more preferably between approximately 10 mm and approximately 15 mm, less than the distance between the sprinkler itself and the dishes contained in the basket 80. It will be consequently appreciated that, in said steps of filling of the tank 30, the water charged into the tub 3 from the water mains will remain substantially clean, even though it is sent into circulation by the pump 87.

A practical example of operation of the hydraulic circuit of the machine 1, for the purposes of charging of the tank 30 with clean water is described in what follows.

At the end of charging of the water into the tub, the control system issues a command for opening of the valve 50 and operates the pump 87 at the aforesaid reduced speed. It is to be noted that, in the step of filling of the tank 30, it is not necessary for the heating element for heating the water to be active. Upon start of the step of filling of the tank 30, the device 40 is in (or is, for this purpose, brought by the control system into) the condition of outlet 44 closed and outlet 43 open.

In this way, during the step of filling of the tank 30, the pump 87 driven at the reduced speed forces the water both into the supply pipe 86 of the sprinkler 84 and, through the pipe 46, into the tank 30, as has been described previously. The supply section of the upper sprinkler of the machine is the one distinguished by higher head losses: on this basis, the reduced speed at which to drive the pump 87 will be such that the water forced into the pipe 86 climbs up the pipe itself but, given the reduced head, only up to a certain point, without being able to reach the sprinkler 84 and/or without being able to supply it so that the water can exit from its holes. In effect, hence, in the pipe 86 the water does not manage to exceed a certain height, which depends (in a known way) upon the characteristics of the hydraulic circuit. This will in any case not prevent an at least partial filling of the tank 30, at least up to a level equal to the one reached by the liquid inside the pipe 86.

When the programmed filling of the tank 30 has been reached (as has already been said in relation to the first embodiment discussed, the level of filling may be timed or else controlled via a corresponding sensor, for example, a turbine volumetric sensor), the control system issues a command for closing of the valve 50 and possible arrest of the pump 87. Next, the control system issues a command for a new charging of water into the tub, for the residual amount necessary to carry out a treatment step. Possibly, charging of the water from the mains supply may occur in dynamic conditions, i.e., with the washing pump active.

In the course of at least one step of hot treatment subsequent to filling of the tank 30, the washing water present in the tub is first heated and then recirculated by the pump 87 and the sprinkler system 83-86, according to modalities in themselves known. In said treatment step, the control system drives the motor of the pump 87 at the treatment speed, for supply of the sprinkler 83 and/or of the sprinkler 84 with a pressure such as to render effective operation thereof, i.e., such as to cause the water sprayed by the sprinkler 83 and/or the sprinkler 84 to impinge effectively upon the dishes contained in the baskets 80 and/or 81 and cause rotation of the sprinklers. In this way, the hot water will yield part of its own heat not only to the dishes being treated, but also to the walls of the tub 3, including the wall 3d set up against which is the tank 30: in this way, a heat exchange is obtained, which generates a partial heating of the contents of the tank itself. It should be pointed out that, according to the type of treatment program set, the aforesaid step of treatment can be carried out using just one sprinkler or both of the sprinklers: obviously, according to the cases, the control system will issue a command for switching the device 40 accordingly. At the end of the treatment step there is then envisaged the step of discharge of the liquid from the tub 3, with the control system that governs the discharge pump accordingly.

Next, for example immediately after the aforesaid step of discharge of the tub, the control system issues a command for carrying out the step of discharge of the tank 30, according to modalities similar to those already described previously; i.e., it governs opening of the valve 50, in the absence of supply of the pump 87. In this way, the contents of the tank are poured back into the tub. As has been said, the water contained in the tank 30 has been in the meantime at least partially heated, and said circumstance enables reduction in energy consumption, if the subsequent treatment step envisaged by the cycle implies heating of the water.

As mentioned, however, discharge of the tank 30 may take place even in a treatment cycle subsequent to the one during which substantially clean water has been introduced into the tank 30.

The fluid-dynamic characteristics of the hydraulic circuit of the machine 1 can possibly be established also in such a way that the step of filling of the tank 30 with substantially clean water present in the tub can be obtained by driving the motor of the pump 87 at a reduced speed, and with the openings 43 and 44 of the device both open. In such an embodiment, in the course of the step of filling of the tank 30, the pump 87 takes in water from the sump 88 and forces it both into the pipe 85 and into the pipe 86 (as well as into the pipe 46): given the reduced pressure of the fluid at output from the pump 87, the water comes out from the holes of the sprinkler 83 with jets having a height insufficient to produce wetting of the dishes contained in the basket 80; i.e., it exits from the sprinkler without substantially reaching the dishes. On the other hand, the water forced into the pipe 86 may climb up the pipe itself, but only up to a certain point, given the reduced head, without being able to reach the sprinkler 84. Given the constancy of opening of the outlet 45 of the device 40 and the concomitant opening of the valve 50, part of the water forced by the pump 87 also reaches the inside of the tank 30, via the pipe 46.

The water that exits from the sprinkler 83 drops onto the bottom of the tub and converges in the sump 88, and is then sent back into circulation via the pump 87. The water is circulated in this way until programmed filling of the tank 30 is completed. The control system then issues a command for closing of the valve 50. For the rest, operation of the machine 1 is similar to what has just been described above with reference to the case of opening of the outlet 43 and closing of the outlet 44 of the device 40.

Not excluded from the sphere of application of the invention is the case of opening of the outlet 44 and simultaneous closing of the outlet 43, with actuation of the pump 87 at a reduced speed. In such a case, the system can be devised so that the water will exit from the sprinkler 83, without reaching the dishes contained in the lower basket 80, and then drop back on the bottom of the tub and converge in the sump 88, and then be sent back into circulation by the pump 87, as in the previous case.

It will be appreciated that the modalities of control of the motor of the pump 87 described above, based upon driving of the corresponding motor at the reduced speed, can be used also in order to carry out the steps of filling of the tank with liquid already used in the course of a treatment step, such as the rinsing liquid.

It is clear that numerous variations may be made by the person skilled in the branch to the dish-washing machine described by way of example, without thereby departing from the scope of the invention as defined in the annexed claims.

The dish-washing machine according to the invention may be a dish-washing machine that comprises a sprinkler member set above the upper basket of the machine, in particular a third sprinkler member additional to those usually provided under the two baskets (such as the sprinklers 83 and 84, respectively, exemplified previously), for instance, a substantially shower-type sprinkler, mounted at the upper wall 3b of the tub. Machines of this type, where the third sprinkler member can be of a stationary type, are generally known. In said embodiment, the device 40, with the corresponding casing and internal open/close element, will be configured so as to have, in addition to the outlets 43, 44 and 45, a further outlet connected to the supply of the aforesaid third sprinkler. Preferably, the steps of filling/emptying of the tank, according to the modalities described previously, based upon the control of the speed of the motor of the washing pump, may be carried out when the device 40 is in the position of supply of the aforesaid third sprinkler member, the supply channel of which will be the one distinguished by the highest head losses.

## Claims

1. A method for controlling a dish-washing machine having a control system that includes means for selecting, starting and controlling a plurality of treatment programs, the machine having a tank (30) for storage of water, wherein the programs of said plurality comprise:
- at least one program, which includes a step of filling of the tank (30) with water,
- at least one program, which includes a step of emptying of the tank (30) into a wash tub (3) and a subsequent step of treatment of dishes that is carried out using the water emptied from the tank (30) into the wash tub (3),
- at least one treatment program that does not include steps of treatment of dishes using water emptied from the tank (30) into the wash tub (3);
**characterized in that**, when the time of permanence of the water within the tank (30) is equal to or greater than a prefixed value, the following operations are provided:
1) carrying out a forced emptying of the tank (30) in a step of any program of said plurality that is started after the time of permanence of the water within the tank (30) has reached or exceeded the prefixed value; and
2) draining from the wash tub (3) the water emptied from the tank (30) following upon said forced emptying, without using said water for carrying out a step of treatment of dishes.

2. The method according to Claim 1, comprising the operations of:
- starting a time counter on the occasion of the execution of a program of said plurality that provides for a step of filling of the tank (30);
- stopping and/or zeroing the time counter following upon a step of emptying of the tank (30); and
- if the time counter takes on value which is equal to or greater than the prefixed value without a step of emptying of the tank (30) having been carried out in the meantime, carrying out operations 1) and 2) in the course of an initial part of said any program.

3. The method according to Claim 2, wherein, at least on the occasion of the start of any program of said plurality, an operation of comparing the value taken by the time counter with the prefixed value is provided for.

4. The method according to Claim 1 or Claim 2, wherein, after operation 2), a charging of water in the wash tub (3) from a water mains is carried out.

5. The method according to any one of the preceding claims, also comprising the operation of storing information representative of an interruption of electric supply to the dish-washing machine.

6. The method according to Claim 5, comprising carrying out operations 1) and 2) based on said information, on the occasion of the execution of any program of said plurality which is started after reinstatement of the electric supply to the dish-washing machine.

7. The method according to any one of the preceding claims, also comprising the operation of estimating the duration of an interruption of electric supply to the dish-washing machine and updating the time counter accordingly.

8. The method according to any one of the preceding claims, wherein the machine comprises a commutable device (40), operatively arranged downstream of a delivery section of a washing pump (87), for controlling the water supply to a sprinkler system (83-86), wherein the commutable device (40) comprises a casing (41) having an inlet (42), connected to the delivery section of the washing pump (87), at least one first outlet (44) and one second outlet (43) in fluid communication with a first sprinkler member and a second sprinkler member, respectively, within the casing (41) there being mounted displaceable a distributor member, to be driven by an actuator for taking on a plurality of operating positions, amongst which at least one first operating position, of simultaneous opening of the first and second outlets (43, 44), and at least one second operating position, of opening of one of the first and second outlets and of simultaneously closing the other one of the first and second outlets,
and wherein the method further comprises:
- during operation of the washing pump (87), forcing water into a third outlet (45) of the casing (41) of the commutable device (40) which is always open, irrespective of the operating position taken on by the distributor member, and which is connected to a first opening (39a) of the tank (30) that operates alternatively as inlet and as outlet for water with respect to the tank;
- during execution of a step of filling the tank (30), causing an opening and a subsequent closing of valve means (50) operatively arranged between said third outlet (45) and said first opening (39a), also activating the washing pump (87) at least for a time period comprised between the opening and the closing of the valve means (50); and
- during execution of a step of emptying of the tank (30), causing opening and subsequent closing of the valve means (50) in the absence of activation of the washing pump (87) at least for a time period comprised between the opening and the closing of the valve means (50).

9. The method according to Claim 8, wherein:
- during execution of a step of treatment of the dishes, a motor of the washing pump (87) is driven at a treatment speed such as to render operation of the sprinkler system (83-86) effective for the purposes of wetting the dishes;
- during execution of a step of filling of the tank (30), the motor of the washing pump (87) is brought to assume a reduced speed, which is lower than the treatment speed and is lower than the minimum speed required for obtaining from the washing pump (12) a pressure and/or a head sufficient for rendering operation of the sprinkler system (83-86) effective for the purposes of wetting the dishes.

10. A dish-washing machine comprising a wash tub (3), loading means for charging water into the tub (3) from a water mains, a sprinkler system (83-86), a washing pump (87) for supplying the sprinkler system (83-86) with water from a bottom (3a, 88) of the tub (3), a drain pump for discharging water from the bottom of the tub (3), a water-storage system (30, 45, 46, 50), comprising a tank (30) defining an internal cavity capable to be placed in fluid communication with the inside of the tub (3) for the filling and emptying of the tank, a control system (E) configured for controlling a plurality of different programs for treatment of the dishes, amongst which:
- at least one program, which includes a step of filling of the tank (30) with water;
- at least one program, which includes a step of emptying of the tank (30) into the wash tub (3) and a subsequent step of treatment of dishes which is carried out using the water emptied from the tank (30) into the wash tub (3);
- at least one treatment program that does not include any steps of treatment of dishes using water emptied from the tank (30) into the wash tub (3);
the control system comprising means for selection and the start of a program of said plurality,
**characterized in that** the control system is prearranged for:
- starting a time counting on the occasion of the execution of a program of said plurality that provides for a step of filling of the tank (30);
- controlling a forced emptying of the tank (30) in a step of any program of said plurality that is started after the time counting has reached or exceeded a prefixed value; and
- controlling a drain of the wash tub (3) of the water emptied from the tank (30) following upon said forced emptying, without using said water for the execution of the step of treatment of the dishes.

11. The dish-washing machine according to Claim 10, wherein the control system comprises:
- means for starting a time counter on the occasion of the execution of a program of said plurality that provides for a step of filling of the tank (30); and
- means for stopping and/or zeroing the time counter following upon a step of emptying of the tank (30).

12. The machine according to Claim 10 or Claim 11, wherein the control system is configured for memorizing information representative of an interruption of electric supply to the dish-washing machine.

13. The machine according to Claim 12, wherein the control system comprises means for estimating the duration of an interruption of electric supply to the dish-washing machine and for updating the time counting accordingly.

14. The machine according to Claim 10, comprising:
- at least one lower basket (80) and one upper basket (81) for containing dishes in the tub (3); and
- a commutable device (40), operatively arranged downstream of a delivery section of the washing pump (87), for the control of the supply of water to the sprinkler system (83-86);
wherein the sprinkler system includes at least one first sprinkler member (83) for sprinkling water on the dishes contained in the lower basket (80), at least one second sprinkler member (84) for sprinkling water on the dishes contained in the upper basket (81), a first supply pipe (85) for supplying the first sprinkler member (83), and a second pipe (86) for supplying the second sprinkler member (84),
wherein the commutable device (40) comprises a casing (41) having an inlet (42), connected to the delivery section of the washing pump (87), a first outlet (44) connected to the first pipe (85), and a second outlet (43) connected to the second pipe (85), within the casing (41) there being mounted displaceable a distributor member, to be driven by an actuator for taking on a plurality of operating positions, amongst which at least one first operating position, of simultaneous opening of the first and second outlets (43, 44), and at least one second operating position, of opening of one of the first and second outlets and simultaneous closing the other one of the first and second outlets,
and wherein:
- the casing (41) of the commutable device (40) has a third outlet (45) that is always open; i.e., is open irrespective of the operating position taken on by the distributor member;
- the third outlet (45) of the casing (41) of the commutable device (40) is connected via a third pipe (46) to a first opening (39a) of the tank (30) that operates alternatively as an inlet and as an outlet for water with respect to said cavity;
- valve means (50) are operative between the third outlet (45) of the casing (41) of the commutable device (40) and the first opening (39a) of the tank (30), which valve means are controllable independently of the commutable device (40).

15. The dish-washing machine according to any one of the preceding claims, wherein the control system is prearranged for:
- driving the motor of the washing pump (87), during execution of a step of treatment of the dishes, at a treatment speed such as to render the sprinkler system (83-86) effective for the purposes of wetting the dishes;
- driving the motor of the washing pump (87), during execution of a step of filling of the tank (30), at a reduced speed, which is lower than the treatment speed and is lower than the minimum speed required for obtaining from the washing pump (12) a pressure and/or a head sufficient for rendering operation of the sprinkler system (83-86) effective for the purposes of wetting the dishes.

## Patentansprüche

1. Verfahren zum Steuern / Regeln einer Geschirrspülmaschine, die ein Steuerungssystem / Regelungssystem aufweist, das Mittel zum Auswählen, Starten und Steuern/ Regeln einer Mehrzahl von Behandlungsprogrammen umfasst, wobei die Maschine einen Tank (30) zur Speicherung von Wasser aufweist, wobei die Programme aus der Mehrzahl umfassen:
- wenigstens ein Programm, das einen Schritt eines Füllens des Tanks (30) mit Wasser umfasst,
- wenigstens ein Programm, das einen Schritt eines Leerens des Tanks (30) in einen Waschbehälter (3) und einen nachfolgenden Schritt einer Behandlung von Geschirr umfasst, der unter Verwendung des Wassers, das von dem Tank (30) in den Waschbehälter (3) geleert wird, ausgeführt wird,
- wenigstens ein Behandlungsprogramm, das Schritte einer Behandlung von Geschirr unter Verwendung von Wasser, das von dem Tank (30) in den Waschbehälter (3) geleert wird, nicht umfasst;
**dadurch gekennzeichnet, dass**, wenn die Bestandszeit des Wassers innerhalb des Tanks (30) gleich oder größer als ein vorfestgesetzter Wert ist, die folgenden Vorgänge vorgesehen werden:
1) Ausführen eines erzwungenen Leerens des Tanks (30) in einem Schritt von einem Programm aus der Mehrzahl, das, nachdem die Bestandszeit des Wassers innerhalb des Tanks (30) den vorfestgesetzten Wert erreicht oder überschritten hat, gestartet wird;
2) Ablassen des Wassers von dem Waschbehälter (3), das aus dem Tank (30) geleert wird, folgend dem erzwungenen Leeren, ohne Verwendung des Wassers zum Ausführen eines Schrittes der Behandlung von Geschirr.

2. Verfahren nach Anspruch 1, umfassend die Vorgänge von:
- Starten eines Zeitzählers zu dem Anlass der Ausführung eines Programms aus der Mehrzahl, das einen Schritt eines Füllens des Tanks (30) vorsieht;
- Anhalten und/ oder auf null setzen des Zeitzählers folgend auf einen Schritt eines Leerens des Tanks (30); und
- wenn der Zeitzähler einen Wert annimmt, der gleich oder größer als der vorfestgesetzte Wert ist, ohne dass ein Schritt eines Leerens des Tanks (30) in der Zwischenzeit ausgeführt wurde, Ausführen von Vorgängen 1) und 2) im Zuge eines Anfangsteils des einen Programms.

3. Verfahren nach Anspruch 2, wobei, wenigstens zu dem Anlass des Starts eines Programms aus der Mehrzahl, ein Vorgang eines Vergleichens des Werts, der durch den Zeitzähler angenommen wird, mit dem vorfestgesetzten Wert, vorgesehen wird.

4. Verfahren nach Anspruch 1 oder Anspruch 2, wobei nach Vorgang 2) ein Füllen von Wasser von einer Wasserleitung in den Waschbehälter (3) ausgeführt wird.

5. Verfahren nach einem der vorhergehenden Ansprüche, ferner umfassend den Vorgang eines Speicherns von Informationen, die repräsentativ für eine Unterbrechung einer elektrischen Versorgung der Geschirrspülmaschine sind.

6. Verfahren nach Anspruch 5, umfassend ein auf den Informationen basierendes Ausführen von Vorgängen 1) und 2), zu dem Anlass des Ausführens eines Programms aus der Mehrzahl, das nach einer Wiederherstellung der elektrischen Versorgung der Geschirrspülmaschine gestartet wird.

7. Verfahren nach einem der vorhergehenden Ansprüche, ferner umfassend den Vorgang eines Schätzens der Dauer einer Unterbrechung der elektrischen Versorgung der Geschirrspülmaschine und entsprechendes Aktualisieren des Zeitzählers.

8. Verfahren nach einem der vorhergehenden Ansprüche, wobei die Maschine eine umschaltbare Vorrichtung (40) umfasst, die betriebsmäßig stromabwärts eines Zuführabschnitts einer Waschpumpe (87) angeordnet ist, zum Steuern/ Regeln der Wasserzufuhr zu einem Sprühsystem (83-86), wobei die umschaltbare Vorrichtung (40) ein Gehäuse (41) umfasst, das einen Einlass (42), der mit dem Zuführabschnitt der Waschpumpe (87) verbunden ist, wenigstens einen ersten Auslass (44) und einen zweiten Auslass (43) in Fluidverbindung mit einem ersten Sprühelement bzw. einem zweiten Sprühelement aufweist, wobei innerhalb des Gehäuses (41) ein Verteilerelement verlagerbar montiert ist, um durch einen Aktuator zum Einnehmen einer Mehrzahl von Betriebspositionen angetrieben zu werden, unter denen wenigstens eine erste Betriebsposition eines gleichzeitigen Öffnens des ersten und zweiten Auslasses (43, 44) und wenigstens eine zweite Betriebsposition eines Öffnens von einem aus dem ersten und zweiten Auslass und eines gleichzeitigen Schließens von dem anderen einen aus dem ersten und zweiten Auslass ist,
und wobei das Verfahren ferner umfasst:
- Zwingen von Wasser, während eines Betriebs der Waschpumpe (87), in einen dritten Auslass (45) des Gehäuses (41) der umschaltbaren Vorrichtung (40), der immer offen ist, unabhängig von der Betriebsposition, die durch das Verteilerelement eingenommen wird und der zu einer ersten Öffnung (39a) des Tanks (30) verbunden ist, die alternativ als ein Einlass und ein Auslass für Wasser im Hinblick auf den Tank betrieben wird;
- während einer Ausführung eines Schrittes eines Füllens des Tanks (30), Bewirken einer Öffnung und eines nachfolgenden Schließens von Ventilmitteln (50), die betriebsmäßig zwischen dem dritten Auslass (45) und der ersten Öffnung (39a) angeordnet sind, ferner Aktivieren der Waschpumpe (87) für wenigstens einen Zeitraum, der zwischen dem Öffnen und dem Schließen der Ventilmittel (50) enthalten ist; und
- Bewirken einer Öffnung und eines nachfolgenden Schließens der Ventilmittel (50) während einer Ausführung eines Schrittes eines Leerens des Tanks (30), beim Ausbleiben einer Aktivierung der Waschpumpe (87), wenigstens für einen Zeitraum, der zwischen dem Öffnen und dem Schließen von den Ventilmitteln (50) umfasst ist.

9. Verfahren nach Anspruch 8, wobei:
- während einer Ausführung eines Schritts einer Behandlung des Geschirrs ein Motor der Waschpumpe (87) mit einer Behandlungsgeschwindigkeit angetrieben wird, um einen Betrieb des Sprühsystems (83-86) für die Zwecke des Benetzens des Geschirrs wirksam zu machen;
- während einer Ausführung eines Schritts eines Füllens des Tanks (30) der Motor der Waschpumpe (87) dazu gebracht wird, eine verringerte Geschwindigkeit anzunehmen, die geringer als die Behandlungsgeschwindigkeit ist und geringer als die minimale Geschwindigkeit ist, die benötigt wird, um von der Waschpumpe (12) einen Druck und/ oder eine Druckhöhe zu erhalten, der/ die ausreichend ist, um einen Betrieb des Sprühsystems (83-86) für die Zwecke des Benetzens des Geschirrs wirksam zu machen.

10. Geschirrspülmaschine umfassend einen Waschbehälter (3), Lademittel zum Füllen von Wasser von einer Wasserleitung in den Behälter (3), ein Sprühsystem (83-86), eine Waschpumpe (87) zum Versorgen des Sprühsystems (83-86) mit Wasser von einem Boden (3a, 88) des Behälters (3), eine Entleerungspumpe zum Abführen von Wasser von dem Boden des Behälters (3), ein Wasserspeichersystem (30, 45, 46, 50), umfassend einen Tank (30), der einen internen Hohlraum definiert, der dazu fähig ist, in Fluidkommunikation mit der Innenseite des Behälters (3) für das Füllen und das Leeren des Tanks gesetzt zu werden, ein Steuerungssystem/ Regelungssystem (E), das zum Steuern/ Regeln einer Mehrzahl von verschiedenen Programmen zur Behandlung von Geschirr konfiguriert ist, darunter:
- wenigstens ein Programm, das einen Schritt eines Füllens des Tanks (30) mit Wasser umfasst;
- wenigstens ein Programm, das einen Schritt eines Leerens des Tanks (30) in den Waschbehälter (3) und einen nachfolgenden Schritt einer Behandlung des Geschirrs umfasst, der unter Verwendung von Wasser ausgeführt wird, das von dem Tank (30) in den Waschbehälter (3) geleert wird;
- wenigstens ein Behandlungsprogramm, das Schritte einer Behandlung von Geschirr unter Verwendung von Wasser, das von dem Tank (30) in den Waschbehälter (3) geleert wird, nicht umfasst;
wobei das Steuerungssystem/ Regelungssystem Mittel zur Auswahl und den Start von einem Programm aus der Mehrzahl umfasst,
**dadurch gekennzeichnet, dass** das Steuerungssystem/ Regelungssystem bestimmt ist:
- zum Starten eines Zeitzählens zu dem Anlass der Ausführung eines Programms aus der Mehrzahl, das einen Schritt eines Füllens des Tanks (30) vorsieht;
- zum Steuern/ Regeln eines erzwungenen Leerens des Tanks (30) in einem Schritt von einem Programm aus der Mehrzahl, das, nachdem das Zeitzählen einen vorfestgesetzten Wert erreicht oder überschritten hat, gestartet wird;
und
- zum Steuern/ Regeln eines Abflusses aus dem Waschbehälter (3) von dem Wasser, das aus dem Tank (30) geleert wird, folgend auf das erzwungene Leeren, ohne Verwendung des Wassers für die Ausführung des Schrittes einer Behandlung des Geschirrs.

11. Geschirrspülmaschine nach Anspruch 10, wobei das Steuerungssystem/ Regelungssystem umfasst:
- Mittel zum Starten eines Zeitzählers zu dem Anlass der Ausführung eines Programms aus der Mehrzahl, das einen Schritt eines Füllens des Tanks (30) vorsieht; und
- Mittel zum Anhalten und/ oder auf null setzen des Zeitzählers folgend einem Schritt des Leerens des Tanks (30).

12. Geschirrspülmaschine nach Anspruch 10 oder Anspruch 11, wobei das Steuerungssystem/ Regelungssystem zum Speichern von Informationen, die repräsentativ für eine Unterbrechung der elektrischen Versorgung der Geschirrspülmaschine sind, konfiguriert ist.

13. Geschirrspülmaschine nach Anspruch 12, wobei das Steuerungssystem/ Regelungssystem Mittel zum Schätzen der Dauer einer Unterbrechung einer elektrischen Versorgung der Geschirrspülmaschine und zum entsprechenden Aktualisieren des Zeitzählers umfasst.

14. Geschirrspülmaschine nach Anspruch 10, umfassend:
- wenigstens einen unteren Korb (80) und einen oberen Korb (81) zum Aufnehmen von Geschirr in dem Behälter (3); und
- eine umschaltbare Vorrichtung (40), die betriebsmäßig stromabwärts eines Zufuhrabschnitts der Waschpumpe (87) angeordnet ist, zur Steuerung/ Regelung der Zufuhr von Wasser zu dem Sprühsystem (83-86);
wobei das Sprühsystem wenigstens ein erstes Sprühelement (83) zum Sprühen von Wasser auf das Geschirr, das in dem unteren Korb (80) enthalten ist, wenigstens ein zweites Sprühelement (84) zum Sprühen von Wasser auf das Geschirr, das in dem oberen Korb (81) enthalten ist, eine erste Zuleitung (85) zum Versorgen des ersten Sprühelements (83) und eine zweite Zuleitung (86) zum Versorgen des zweiten Sprühelements (84), umfasst,
wobei die umschaltbare Vorrichtung (40) ein Gehäuse (41), das einen Einlass (42) aufweist, der mit dem Zufuhrabschnitt der Waschpumpe (87) verbunden ist, einen ersten Auslass (44), der mit der ersten Leitung (85) verbunden ist und einen zweiten Auslass (43), der mit der zweiten Leitung (85) verbunden ist, umfasst, wobei innerhalb des Gehäuses (41) ein Verteilerelement verlagerbar montiert ist, um durch einen Aktuator zum Einnehmen einer Mehrzahl von Betriebspositionen angetrieben zu werden, unter denen wenigstens eine erste Betriebsposition eines gleichzeitigen Öffnens des ersten und zweiten Auslasses (43, 44) und wenigstens eine zweite Betriebsposition eines Öffnens von einem aus dem ersten und zweiten Auslass und eines gleichzeitigen Schließens von dem anderen einen aus dem ersten und zweiten Auslass ist,
und wobei:
- das Gehäuse (41) der umschaltbaren Vorrichtung (40) einen dritten Auslass (45) aufweist, der immer offen ist; d.h., unabhängig von der Betriebsposition, die durch das Verteilerelement eingenommen wird, offen ist;
- der dritte Auslass (45) des Gehäuses (41) der umschaltbaren Vorrichtung (40) über eine dritte Leitung (46) mit einer ersten Öffnung (39a) des Tanks (30) verbunden ist, die alternativ als ein Einlass und als ein Auslass für Wasser in Bezug auf den Hohlraum betrieben wird;
- Ventilmittel (50) betriebsmäßig zwischen dem dritten Auslass (45) des Gehäuses (41) der umschaltbaren Vorrichtung (40) und der ersten Öffnung (39a) des Tanks (30) sind, wobei die Ventilmittel unabhängig von der umschaltbaren Vorrichtung (40) steuerbar/ regelbar sind.

15. Geschirrspülmaschine nach einem der vorhergehenden Ansprüche, wobei das Steuerungssystem/ Regelungssystem bestimmt ist:
- zum Antreiben des Motors der Waschpumpe (87) mit einer Behandlungsgeschwindigkeit während einer Ausführung eines Schritts einer Behandlung des Geschirrs, um einen Betrieb des Sprühsystems (83-86) für die Zwecke des Benetzens des Geschirrs wirksam zu machen;
- zum Antreiben des Motors der Waschpumpe (87) mit einer verringerten Geschwindigkeit während einer Ausführung eines Schritts eines Füllens des Tanks (30), die geringer als die Behandlungsgeschwindigkeit ist und geringer als die minimale Geschwindigkeit ist, die benötigt wird, um von der Waschpumpe (12) einen Druck und/ oder eine Druckhöhe zu erhalten, der/ die ausreichend ist, um einen Betrieb des Sprühsystems (83-86) für die Zwecke des Benetzens des Geschirrs wirksam zu machen.

## Revendications

1. Procédé de commande d'une machine à laver la vaisselle présentant un système de commande qui comprend des moyens pour sélectionner, démarrer et commander une pluralité de programmes de traitement, la machine présentant un réservoir (30) destiné au stockage de l'eau, dans lequel les programmes de ladite pluralité comportent :
- au moins un programme, lequel comprend une étape de remplissage du réservoir (30) avec de l'eau,
- au moins un programme, lequel comprend une étape de vidage du réservoir (30) dans la cuve de lavage (3) et une étape ultérieure de traitement de la vaisselle qui est réalisée en utilisant l'eau sortant du réservoir (30) à destination de la cuve de lavage (3),
- au moins un programme de traitement qui ne comprend pas d'étapes de traitement de la vaisselle en utilisant l'eau vidée à partir du réservoir (30) à destination de la cuve de lavage (3) ;
**caractérisé en ce que**, lorsque le temps de séjour de l'eau à l'intérieur du réservoir (30) est égal ou supérieur à une valeur préfixée, les opérations suivantes sont fourniers :
1) réaliser un vidage forcé du réservoir (30) dans une étape de l'un quelconque des programmes de ladite pluralité qui démarre après que le temps de séjour de l'eau à l'intérieur du réservoir (30) a atteint ou dépassé la valeur préfixée ; et
2) évacuer hors de la cuve de lavage (3) l'eau déversée à partir du réservoir (30) postérieurement au dit vidage forcé, sans utiliser ladite eau pour exécuter une étape de traitement de la vaisselle.

2. Procédé selon la revendication 1, comportant les opérations de :
- mettre en route un compteur de temps lors de l'exécution d'un programme de ladite pluralité, lequel fournit une étape de remplissage du réservoir (30) ;
- arrêter et/ou remettre à zéro le compteur de temps après une étape de vidage du réservoir (30) ; et
- si le compteur de temps présente une valeur qui est égale ou supérieure à la valeur préfixée sans une étape de vidage du réservoir (30) qui a été réalisée pendant ce temps-là, exécuter les opérations 1) et 2) au cours d'une partie initiale de l'un quelconque desdits programmes.

3. Procédé selon la revendication 2, dans lequel, au moins lors du démarrage de l'un quelconque des programmes de ladite pluralité, une opération de comparaison de la valeur prise par le compteur de temps avec la valeur préfixée est prévue.

4. Procédé selon la revendication 1 ou la revendication 2, dans lequel, après l'opération 2), un chargement en eau est effectué dans la cuve de lavage (3) à partir de l'alimentation principale en eau.

5. Procédé selon l'une quelconque des revendications précédentes comportant également l'opération de stocker une information représentative d'une interruption de l'alimentation électrique à destination de la machine à laver la vaisselle.

6. Procédé selon la revendication 5, comportant de réaliser les opérations 1) et 2) sur la base de ladite information, lors de l'exécution d'un programme quelconque de ladite pluralité, lequel a démarré après le rétablissement de l'alimentation électrique destinée à la machine à laver la vaisselle.

7. Procédé selon l'une quelconque des revendications précédentes, comportant l'opération d'estimer la durée d'une interruption de l'alimentation électrique destinée à la machine à laver la vaisselle et à actualiser en conséquence le compteur de temps.

8. Procédé selon l'une quelconque des revendications précédentes, dans lequel la machine comporte un dispositif commutable (40), disposé fonctionnellement en aval d'une section de distribution d'une pompe de lavage (87), afin de commander l'alimentation en eau destinée à un système d'aspersion (83-86), dans lequel le dispositif commutable (40) comporte un boîtier (41) présentant un orifice d'entrée (42), raccordé à la section de distribution de la pompe de lavage (87), au moins un premier orifice de sortie (44) et un deuxième orifice de sortie (43) en communication de fluide avec un premier élément d'aspersion et avec un deuxième élément d'aspersion, respectivement, un élément de distribution étant monté, de façon mobile, à l'intérieur du boîtier (41), pour être commandé par un actionneur en vue de prendre une pluralité de positions fonctionnelles, parmi lesquelles au moins une première position fonctionnelle, correspondant à une ouverture simultanée des premier et deuxième orifices de sortie (43, 44), et au moins une deuxième position fonctionnelle correspondant à l'ouverture d'un des premier et deuxième orifices de sortie et à la fermeture de façon simultanée de l'autre des premier et deuxième orifices de sortie,
et dans lequel le procédé comporte, de plus, le fait de :
- pendant le fonctionnement de la pompe de lavage (87), forcer l'eau dans un troisième orifice de sortie (45) du boîtier (41) du dispositif commutable (40) qui est toujours ouvert, sans tenir compte de la position fonctionnelle prise par l'élément de distribution, et qui est raccordé à une première ouverture (39a) du réservoir (30) qui fonctionne de façon alternée comme un orifice d'entrée et comme un orifice de sortie pour l'eau par rapport au réservoir ;
- pendant la réalisation d'une étape de remplissage du réservoir (30), provoquer une ouverture et une fermeture ultérieure des moyens de vanne (50) disposés fonctionnellement entre ledit troisième orifice de sortie (45) et ladite première ouverture (39a), activer également la pompe de lavage (87), au moins pendant un certain laps de temps compris entre l'ouverture et la fermeture des moyens de vanne (50), et
- pendant l'exécution d'une étape de vidage du réservoir (30), entraîner l'ouverture et la fermeture ultérieure des moyens de vanne (50) en l'absence de l'activation de la pompe de lavage (87) au moins pendant un certain laps de temps compris entre l'ouverture et la fermeture des moyens de vanne (50).

9. Procédé selon la revendication 8, dans lequel :
- pendant la réalisation d'une étape de traitement de la vaisselle, un moteur de la pompe de lavage (87) est entraîné à une vitesse de traitement telle que le fonctionnement du système d'aspersion (83-86) est rendu effectif dans l'objectif de mouiller la vaisselle ;
- pendant l'exécution d'une étape de remplissage du réservoir (30), le moteur de la pompe de lavage (87) est amené à prendre une vitesse réduite, laquelle est inférieure à la vitesse de traitement et est inférieure à la vitesse minimale requise pour obtenir, à partir de la pompe de lavage (12), une pression et/ou une hauteur d'eau suffisantes pour rendre le fonctionnement du système d'aspersion (83-86) effectif dans le but de mouiller la vaisselle.

10. Machine à laver la vaisselle comportant une cuve de lavage (3), des moyens de chargement destinés à charger de l'eau dans la cuve (3) à partir d'une alimentation principale en eau, un système d'aspersion (83-86), une pompe de lavage (87) pour fournir de l'eau au système d'aspersion (83-86) à partir de la partie inférieure (3a, 88) de la cuve (3), une pompe d'évacuation pour évacuer l'eau du fond de la cuve (3), un système de stockage d'eau (30, 45, 46, 50) comportant un réservoir (30) définissant une cavité interne pouvant être placée en communication de fluide avec l'intérieur de la cuve (3) en vue du remplissage et du vidage du réservoir, un système de commande (E) configuré pour commander une pluralité de programmes différents concernant un traitement de la vaisselle, parmi lesquels :
- au moins un programme qui comprend une étape de remplissage du réservoir (30) avec de l'eau ;
- au moins un programme qui comprend une étape de vidage du réservoir (30) dans la cuve de lavage (3) et une étape ultérieure de traitement de la vaisselle, lequel est réalisé en utilisant l'eau déversée à partir du réservoir (30) dans la cuve de lavage (3) ;
- au moins un programme de traitement qui ne comprend aucune des étapes de traitement de la vaisselle utilisant l'eau déversée du réservoir (30) dans la cuve de lavage (3) ;
le système de commande comportant des moyens destinés à la sélection et au démarrage d'un programme de ladite pluralité de programmes,
**caractérisée en ce que** le système de commande est préconçu dans le but de :
- démarrer un comptage de temps lors de l'exécution d'un programme de ladite pluralité qui prévoit une étape de remplissage du réservoir (30) ;
- commander un vidage forcé du réservoir (30) dans une étape de l'un quelconque des programmes de ladite pluralité, lequel est démarré après que le comptage de temps a atteint ou dépassé une valeur préfixée ; et
- commander un vidage de la cuve de lavage (3) pour l'eau déversée à partir du réservoir (30) à la suite dudit vidage forcé, sans utiliser ladite eau pour l'exécution de l'étape de traitement de la vaisselle.

11. Machine à laver la vaisselle selon la revendication 10, dans laquelle le système de commande comporte :
- des moyens pour démarrer un compteur de temps lors de l'exécution d'un programme de ladite pluralité, lequel fournit une étape de remplissage du réservoir (30) ; et
- des moyens pour arrêter et/ou mettre à zéro le compteur de temps à la suite d'une étape de vidage du réservoir (30).

12. Machine selon la revendication 10 ou la revendication 11, dans laquelle le système de commande est configuré pour mémoriser une information représentative d'une interruption de l'alimentation électrique destinée à la machine à laver la vaisselle.

13. Machine selon la revendication 12, dans laquelle le système de commande comporte des moyens pour estimer la durée d'une interruption de l'alimentation électrique destinée à la machine à laver la vaisselle et pour actualiser, en conséquence, le comptage de temps.

14. Machine selon la revendication 10, comportant :
- au moins un panier inférieur (80) et un panier supérieur (81) servant à contenir la vaisselle dans la cuve (3) ; et
- un dispositif commutable (40) disposé fonctionnellement en aval d'une section de distribution de la pompe de lavage (87), destiné à la commande de l'alimentation en eau du système d'aspersion (83-86) ;
dans laquelle le système d'aspersion comprend au moins un premier élément d'aspersion (83) permettant de projeter l'eau sur la vaisselle contenue dans le panier inférieur (80), au moins un deuxième élément d'aspersion (84) permettant de projeter l'eau sur la vaisselle contenue dans le panier supérieur (81), un premier conduit d'alimentation (85) pour alimenter le premier élément d'aspersion (83) et un deuxième conduit (86) pour alimenter le deuxième élément d'aspersion (84),
dans laquelle le dispositif commutable (40) comporte un boîtier (41) présentant un orifice d'entrée (42) raccordé à la section de distribution de la pompe de lavage (87), un premier orifice de sortie (44) raccordé au premier conduit (85) et un deuxième orifice de sortie (43) raccordé au deuxième conduit (85), un élément de distribution se trouvant monté de façon mobile à l'intérieur du boîtier (41) afin d'être commandé par un actionneur en vue de prendre une pluralité de positions fonctionnelles, parmi lesquelles au moins une première position fonctionnelle, correspondant à l'ouverture simultanée du premier et du deuxième orifices de sortie (43, 44) et au moins une deuxième position fonctionnelle correspondant à l'ouverture de l'un des premier et deuxième orifices de sortie et à la fermeture simultanée de l'autre des premier et deuxième orifices de sortie,
et dans laquelle :
- le boîtier (41) du dispositif commutable (40) présente un troisième orifice de sortie (45) qui est toujours ouvert : c'est-à-dire qu'il est ouvert sans prendre en compte la position fonctionnelle prise par l'élément de distribution ;
- le troisième orifice de sortie (45) du boîtier (41) du dispositif commutable (40) est raccordé par l'intermédiaire d'un troisième conduit (46) à une première ouverture (39a) du réservoir (30) qui fonctionne, de façon alternée, comme un orifice d'entrée et comme un orifice de sortie pour l'eau par rapport à ladite cavité ;
- des moyens de vanne (50) sont fonctionnels entre le troisième orifice de sortie (45) du boîtier (41) du dispositif commutable (40) et la première ouverture (39a) du réservoir (30), lesquels moyens de vanne peuvent être commandés de façon indépendante du dispositif commutable (40).

15. Machine à laver la vaisselle selon l'une quelconque des revendications précédentes, dans laquelle le système de commande est préconçu en vue de :
- entraîner le moteur de la pompe de lavage (87), pendant l'exécution d'une étape de traitement de la vaisselle, à une vitesse de traitement telle qu'elle rende le système d'aspersion (83-86) effectif dans l'objectif de mouiller la vaisselle ;
- entraîner le moteur de la pompe de lavage (87), pendant l'exécution d'une étape de remplissage du réservoir (30) à une vitesse réduite, laquelle est inférieure à la vitesse de traitement et est inférieure à la vitesse minimale requise pour obtenir à partir de la pompe de lavage (12) une pression et/ou une hauteur d'eau suffisante pour rendre le fonctionnement du système d'aspersion (83-86) effectif dans le but de mouiller la vaisselle.
